## Europäisches Patentamt
## European Patent Office
## Office européen des brevets

(11) Publication number: **0 045 340**

**A1**

## (12) EUROPEAN PATENT APPLICATION

(21) Application number: **80830047.9**

(22) Date of filing: **10.07.80**

(51) Int. Cl.³: **B 60 B 5/02**

(43) Date of publication of application:
**10.02.82 Bulletin 82/6**

(84) Designated Contracting States:
**AT BE CH DE FR GB LI LU NL SE**

(71) Applicant: **Pellegrino, Giuseppe**
**Via Luca Giordano 142**
**Napoli I-80100(IT)**

(72) Inventor: **Pellegrino, Giuseppe**
**Via Luca Giordano 142**
**Napoli I-80100(IT)**

(74) Representative: **Fiammenghi, Carlo et al,**
**c/o Fiammenghi-Fiammenghi Via Quattro Fontane, No. 31**
**I-00184 Roma(IT)**

(54) **Two-part moulded wheel made of plastic material for children's vehicle.**

(57) A moulded wheel made of plastic material for children's vehicle with pedal-driven wheels, consisting of two identical half-wheels (1a, 1b) separated by the symmetry plane perpendicular to the axis (X-X) of the wheel and formed by a she element produced by only one moulding process and by means of only one die and back draft, and including a hollow, peripheral torus portion (2) which has a semicircular radial section and is connected to a central disc portion (3) from which a short, hollow shaft (4) projects outwards and is integrated with a box-like radial arm (5) integrated in turn at its external end with a sleeve (6) which is provided with a hole (6a) having an axis (Y-Y) parallel to the axis (X-X) of the wheel, and in which the hollow shaft (7) of the pedal crank (8) is fitted, from the internal face of each half-wheel (1a, 1b) at least one guide pin (10) and one guide seat (11) projecting at positions diametrically symmetric with respect to the axis (X-X) of the wheel and at least one fixing means (12) and one housing means (13) projecting at diametrically opposed positions.

FIG.1

EP 0 045 340 A1

- 1 -

Two-part moulded wheel made of plastic material for children's vehicle.

The present invention relates to a moulded wheel consisting of two identical parts made of plastic material which can be jointed by fitting elastically deformable grip means. The two parts of the wheel are also both provided with a support arm for the relative wheel driving pedal crank which can be also manufactured in one piece through a moulding process.

It is already known wheels made of plastic material to provide toys mounted on wheels such as tricycles, hobby-horses or the like which are ridden by the children by means of pedals mounted on the driving and steering wheels. The known types of wheels for such toys are expensive to manufacture both for the large number of dies necessary for the moulding of the various parts and for the construction system which requires the use of pins screws, washers and the like.

The present invention can be used to provide a simplee and strong unit which can be easily assembled and which is totally made of plastic material. In this way its parts cannot rust or lose their colour.

The particular characteristics of such a wheel are the following:

1 - possibility of moulding the wheel in two parts identical to each other produced by means of only one die in only one moulding process, through which also the guide means and the means of connecting the two parts as well as the support arm for the shaft of the relative pedal crank are obtained.

2 - The pedal cranks are identical and produced by means of only one die in only one moulding process, and also include the shaft of the pedal crank which fits in by snap-locking and rotates freely in the seat provided in the body of the arm integrated with the relative half-wheel.

3 - The mounting of the wheel and of the pedal crank is rapid and thanks to the guide pins and seats as well as locking means which can be deformed and blocked does not require screws or other accessories.

4 - Only one die is used for the construction of the whole wheel and only one mould for the pedal cranks.

5 - Pins, washers, screws and other articles of metallic carpentry are eliminated.

The enclosed drawing gives an example of an embodiment of the present invention. In the drawing:

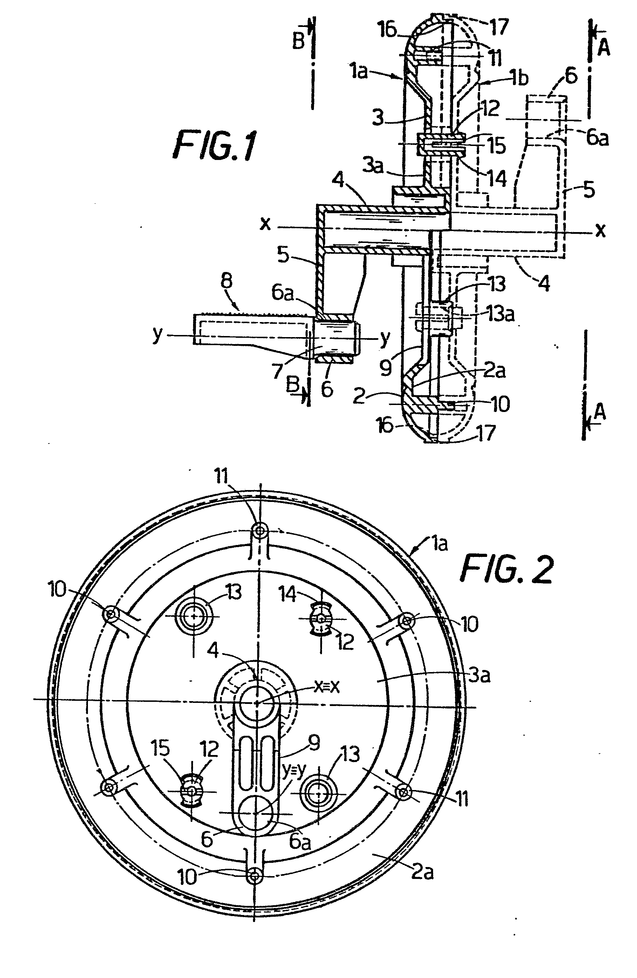

Fig. 1 is an axial section of a half-wheel through the axis of the pedal crank, while the second identical half-wheel is in dashes;

Fig. 2 is a view of the external face of the half-wheel along the line A-a of Fig. 1; Fig. 3 is a view of the internal face of the halfwheel along the line B-B of Fig.

1;

Fig. 4 is a top view of the pedal crank; and

Fig. 5 is a section of the pedal crank along the line C-C of Fig. 3.

Referring to the drawing the two half-wheels, which are marked with 1a and 1b, are perfectly identical to each other so that they can be formed with only one die. Furthermore, such a die includes only one mould and only one back draft due to the particular shape of the half-wheels 1a and 1b. As a result they can be produced through only one moulding process.

To this end both half-wheels 1a and 1b include a tread formed by a peripheral, hollow half-tore having a semicircular section 2 which is joined to a central disc 3. The latter, at the axis X-X of the half-wheel, projects outwards in a short, hollow shaft 4 which forms the half-shaft of the wheel, from the end of which a radial arm 5 projects being provided with an U cross-section.

At the end of the radial arm a tubular sleeve 6 is formed with a drilled hole 6a which has an axis Y-Y parallel to the axis X-X of the wheel and provides a seat for the hollow shaft 7 of the pedal crank marked with 8. In order to allow the moulding of the arm 5 integrated with the sleeve 6, during the moulding process of the half-wheel 1a or 1b, the disc 3 is provided with a radial opening 9 which is complementary to the shape of the arm 5. Little pins 10, which are spaced with equal angle shift from little, hollow cylinders 11 provided with holes for receiving the little pins 10 of the other half-wheel-project from the internal face of the half-wheel 1a or 1b in correspondance with the internal surface 2a of the half-tore 2.

In the illustrated embodiment three little pins and three receiving cylinders 11 alternated to each other are provided. The latter act as guide means for the mounting of the two half-wheels 1a and 1b according to the exact centering requested.

The connection of the half-wheels 1a and 1b is established through elastically deformable fixing means 12 and relevant housing means 13. Such means 12, 13 are formed in the central disc 3 of the half-wheels 1a, 1b.

Hollow sleeves 12 project from the internal face 3a of the central disc 3 of the half-wheels and provide a conical edge 14 projecting outwards. Two longitudinal slots 15 extend along the wall of each sleeve 12 thus forming between them two elastically deformable arms with conical edges 14.

Such fixing means 12 are provided in positions diametrically opposed to each other and symmetrical to the housing means 13 with respect to the axis X-X. The housing means 13 consists of bushes with cylindrical seats 13a having an internal diameter substantially equal to the external diameter of the sleeve 12. The seats 13a have such a length that the bushes 13 can engage the fixing means 12 when the two half-wheels 1a, 1b are in contact with each other. In such a position the conical edges 14 of the fixing means 12 project from the external face of the other half-wheel. In order to establish a good connection between the two half-wheels 1a and 1b, the peripheral edge of the wheel is provided on one half with an internal tongue 16, and on the other half with an external tongue 17, both axially projecting and engageable with each other.

The mounting is effected by drawing near the two halfwheels 1a and 1b to each other, inserting the little pins 10 in their seats 11 and the tongue 16 within the tongue 17 and pressing the half-wheels against each other. With this movement, the two arms of the sleeve 12 approach each other along the slots 15 and enter the seats 13a of the bushes 13 sliding inside until the edges 14 of the arms project outwards from the external face 3 of the respective half-wheels 1a, 1b. This occurs at the same time in which the peripheral edges of the half-wheels 1a, 1b come into contact with each other.

At the same time the edges 14, which are now free, assume their original positions blocking themselves against the external edges of the respective seats 13a keeping the two half-wheels 1a, 1b joined together.

The half-tore 2 of each half-wheel 1a and 1b is provided with annular slots 18 for the fittings of the bead of a tyre which covers the wheel to make it less noisy and to produce a springing effect.

When the two half-wheels 1a and 1b are coupled to each other, the wheel forms a single body from the hubs of which the arms 5 project which are in turn provided with the sleeves 6 for the pedal cranks 8.

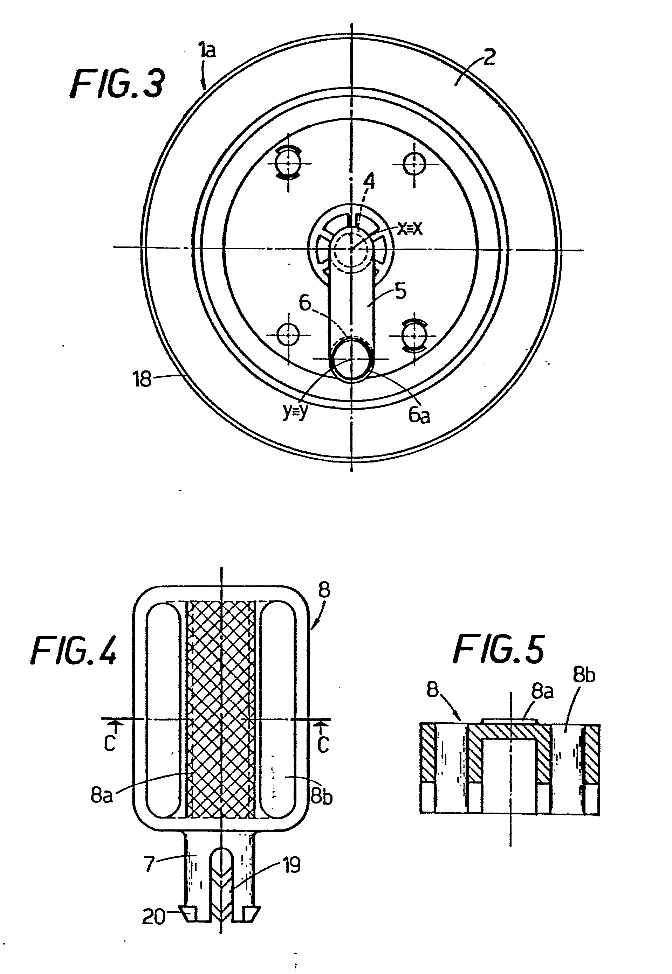

Each pedal crank 8 has a bos-like shape as shown in Figs. 4 and 5 and includes a central rectangular plate 8a with an external knurled surface in order to make the pedalling easier, while at their sides lightening windows 8b are formed. The body of the pedal crank 8 projects in a hollow shaft 7 which is formed substantially similar to the sleeves 12 of the fixing means of the two half-wheels 1a and 1b. The hollow shaft 7 is provided with two opposing slits 19 thus forming two longitudinal arms from the ends of which the conical teeth 20 project outwards. The distance between the teeth 20 and the body of the pedal crank 8 is substantially equal to the depth of the hole 6a formed in the sleeve 6 integrated with the end of the arm 5. by pushing the shaft 7 with the conical teeth 20 within the hole 6a both halves of the shaft 7 approach each other and penetrate along the hole 6a until the teeth 20 project outwards from the latter at the opposite side thus blocking the shaft 7 and then fixing the pedal crank 8 to the arm 5 so that the pedal crank 8 is free to rotate around the axis Y-Y of the hole 6a.

0045340

## CLAIMS

1 - A moulded wheel made of plastic material for children's vehicle with pedal-driven wheels, characterized by the fact that the wheel is produced by the moulding of two identical half-wheels (1a, 1b) corresponding to the two halves of a wheel separated by the symmetry plane perpendicular to the axis thereof, both half-wheels (1a, 1b) consisting of a shell element formed by only one moulding process and by means of only one die and back draft, and including a hollow, peripheral tore portion (2) which has a semicircular radial section and is connected to a central disc portion (3) from which a short, hollow shaft (4) projects outwards and is integrated with a box-like radial arm (5) integrated in turn at its internal end with a sleeve (6) which is provided with a hole (6a) having an axis parallel to the axis of the wheel, and in which the hollow shaft (7) of the pedal crank (8) is fitted, from the internal face of each half-wheel (1a, 1b) at least one guide pin (10) and one guide seat (11) projecting at positions diametrically symmetric with respect to the axis of the wheel and at least one fixing means (12) and one housing means (13) projecting at diametrically opposed positions.

2 - A moulded wheel according to claim 1, wherein the guide pins (10) and the guide seat (11) for said pins are formed in the internal face of the portion (3) of each half-wheel.

3 - A moulded wheel according to claim 1, wherein the fixing means (12) and the housing means (13) project from the internal face of the central disc portion (3) of each half-wheel, said fixing means being formed by arms parallel to the axis of the wheel and separated by longitudinal slits (15) and being able to be deformed by inward pressure, said arms being provided at the external ends with conical edges (14) projecting outwards with their free ends and blocking themselves against the edges of the housing means (13) through which said arms are forced.

4 - A moulded wheel according to claim 1, wherein an opening (9) is formed in the central disc portion (3) of each half-wheel (1a, 1b) having a shape equal to that of the radial arm (5) of the pedal crank (8) in order to carry out the moulding of said arm (5) and of the sleeve (6) along with the body of the half-wheel.

5 - A moulded wheel according to claim 1, wherein the pedal crank (8) consists of a box-like, hollow element which is provided at the bottom face thereof with an opening in order to allow the moulding in one piece, said pedal crank (8) being integrated with a hollow shaft (7) which is provided with longitudinal slits (19) separating the hollow shaft (7) in parallel arms which can be elastically forced inwards, and from the external ends of said arms conical teeth (20) project which are able to engage the internal edge of the hole (6a) of the sleeve (6) for the housing of the shaft (7) of the pedal crank (8) thus permitting the free rotation thereof in said sleeve (6) which has a length substantially equal to the distance between the teeth (20) of the hollow shaft (7) and the body of the pedal crank (8).

-9-

0045340

1 - A moulded wheel made of plastic material for children's vehicle with pedal-driven wheels, consisting of two semi-wheels corresponding to the two halves of a shell-like wheel separated by the symetry plane perpendicular to the axis thereof, characterized by the fact that each half wheel (1a,1b) including a hollow, peripheral tore portion (2), connected to a central disc portion (3), to which a short, hollow shaft (4) is connected, extenting outwardly and which is integral with a box-like radial arm (5), integral in turn, at its internal end with a sleeve (6) the hole (6a) of which has an axis parallel to the axis of the wheel, and designed to rotatably receive the hollow shaft (7) of the pedal crank (8) from the internal face of each half-wheel (1a, 1b) at least one guide pin (10) cooperating with a guide seat (11) projecting at positions diametrically symmetric with respect to the axis of the wheel as well as at least one male point means (12) and one female point means (13) projecting at diametrically opposed positions.

2 - A moulded wheel according to claim 1, wherein the guide pins (10) and the guide seat (11) for said pins are formed in the internal face of the portion (3) of each half-wheel.

3 - A moulded wheel according to claim 1, wherein the male point means (12) and the female point means (13) project from the internal face of the central disc portion (3) of each half-wheel, said male point means (12) being formed

0045340

by arms parallel to the axis of the wheel and being separated by longitudinal slits (15) and being able to be deformed by any inwardly directed pressure, said arms being provided at the external ends with conical teeth (14) projecting outwards with their free ends and blocking themselves against the edges of the housing female point means (13) through which said arms enter.

4 - A moulded wheel according to claim 1, wherein an opening (9) is formed in the central disc portion (3) of each half-wheel (1a, 1 b) having a shape equal to that of the radial arm (5) of the pedal crank (8) in order to permit the mouldeing of said arm (5) and of the sleeve (6) together with the body of the half-wheel.

5 - A moulded wheel according to claim 1, wherein the pedal crank (8) consists of a box-like, hollow element which is provided at the bottom face therof with an opening in order to allow the moulding in one piece, said pedal crank (8) being integral with a hollow shaft (7) provided with longitudinal slits (19) separating the hollow shaft (7) in parallel arms which can be elastically forced inwards, from the external ends of said arms conical teeth (20) projecting outwardly which are able to engage the internal edge of the hole (6a) of the sleeve (6) designed to receive the shaft (7) of the pedal crank (8) thus permitting the free rotation thereof in said sleeve (6), which has a length substantially equal to the distance between the teeth (20) of the hollow shaft (7) and the body of the pedal crank (8).

FIG.1

FIG. 2

0045340

FIG.3

FIG.4

FIG.5

0045340

European Patent Office

Application number

EP 80 83 0047.9

## EUROPEAN SEARCH REPORT

### DOCUMENTS CONSIDERED TO·BE RELEVANT

| Category | Citation of document with indication, where appropriate, of relevant passages | Relevant to claim |
|---|---|---|
| A | US – A – 3 158 404 (G.E. NOAKES) <br> * claims 1 to 3; column 2, lines 7 to 68; fig. 2, 3, 5 * | 1 |
| A | DE – U – 6 753 658 (VDO TACHOMETER WERKE A. SCHINDLING GMBH) <br> * claim 1; page 3, last paragraph to page 4, first paragraph; page 5, last paragraph; fig. 2 * | 1 |
| A | DE – U – 6 917 283 (HAPPE & CO.) <br> * page 1, lines 3 to 9; page 2, paragraph 2; page 4, paragraph 2; fig. 1 * | 1 |
| A | DE – U1 – 7 806 682 (STEPA-PLASTTECHNIK H. W. PATZER) <br> * page 2, lines 4 to 9; fig. 2 * | 1 |
| A | DD – A – 28 030 (W. HEYMANN) <br> * claim 1; column 1, line 22 to column 2, line 6; fig. 2 * | 1 |

**CLASSIFICATION OF THE APPLICATION (Int. Cl.³)**

B 60 B 5/02

**TECHNICAL FIELDS SEARCHED (Int. Cl.³)**

A 63 H 17/18
A 63 H 17/26
B 60 B 3/00
B 60 B 5/00
B 62 K 5/02
B 62 K 9/00
B 62 K 13/04
B 62 M 3/08

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| Berlin | 05-02-1981 | DROPMANN |

EPO Form 1503.1 06.78